# EUROPÄISCHE PATENTSCHRIFT

(11) **EP 1 484 112 B1**
(45) Veröffentlichungstag und Bekanntmachung des Hinweises auf die Patenterteilung: **05.09.2007**
(21) Anmeldenummer: 04021676.4
(22) Anmeldetag: 10.07.1999
(51) Int. Cl.: B01L 9/00, B01D 3/08, F16N 11/10, F16M 11/24

(54) **Höhenverstellbares Stativ und Verfahren zum Auspkuppeln der Haltervorrichtung in einem Stativ**
Height-adjustable support with holder and method of uncoupling the holder
Support ajustable en hauteur, et méthode de découplage du système de maintien associé à ce support

(43) Veröffentlichungstag der Anmeldung: 08.12.2004
(62) Teilanmeldung aus: 99113391.9
(73) Patentinhaber: Büchi Labortechnik AG, CH-9230 Flawil (CH)
(72) Erfinder: Studer, Hans Rudolf, 9015 St. Gallen (CH)
(74) Vertreter: Müller, Christoph Emanuel

(56) Entgegenhaltungen:
- EP-A- 0 149 972
- DE-A- 4 200 118
- DE-U- 9 115 778
- US-A- 4 780 178
- US-A- 5 589 135

## Beschreibung

Die Erfindung betrifft ein höhenverstellbares Stativ, insbesondere ein Stativ für Rotationsverdampfer und ein Verfahren zum Auskuppeln der Haltevorrichtung in einem Stativ mit den Merkmalen des Oberbegriffs der unabhängigen Patentansprüche.

Mit derartigen Stativen, auch Schnellhebevorrichtungen genannt, kann beispielsweise ein Verdampferkolben in einem Wasserbad gehalten werden. Da der Verdampfungsvorgang nur durch rasches Herausheben des Kolbens aus dem Heizbad gestoppt werden kann, ist ein müheloses und rasches Verstellen des Stativs erwünscht.

Solche höhenverstellbare Stative sind beispielsweise aus EP 149 972, DE 26 49 950, EP 05 38 186 oder DE 27 58 433 bekannt.

Ein erstes Erfordernis bei solchen Stativen ist die motorische und gleichzeitig die manuelle Bedienbarkeit des Stativs. Die Haltevorrichtung für den Verdampferkolben soll ausserdem im Notfall auch bei motorischem Antrieb manuell rasch und problemlos aus dem Heizbad hochgehoben werden können.

Gemäss der EP 149 972 wurden diese Probleme dadurch gelöst, dass die Haltevorrichtung für den Kolben über einen Seilzug mit einem Energiespeicher verbunden ist. Mit einer solchen Anordnung wurden bereits zufriedenstellende Resultate hinsichtlich motorischer und manueller Bewegbarkeit erzielt.

Es ist eine Aufgabe der vorliegenden Erfindung, die bekannten Stative weiter zu verbessern. Insbesondere soll bei einer motorisch betätigbaren Haltevorrichtung die Möglichkeit der Entkopplung der Haltevorrichtung vom Antriebsmotor vereinfacht werden. Die Haltevorrichtung soll rasch und mit geringem Kraftaufwand vom Antriebsmotor entkoppelt werden können. Das erfindungsgemässe Stativ soll ausserdem ohne grossen konstruktiven Aufwand auf einfache und wirtschaftliche Weise herstellbar sein.

Eine Gefahr bei solchen bekannten Stativen besteht bei der Verwendung für Rotationsverdampfer darin, dass bei einem Unterbruch der Drehbewegung des Rotationsverdampferkolbens eine Überhitzung im Kolben eintritt. Eine weitere Aufgabe der Erfindung besteht deshalb darin, ein Stativ für einen Rotationsverdampfer zu schaffen, welches bei einem Unterbruch der Drehbewegung des Verdampferkolbens automatisch oder nur durch wenige Handgriffe des Benutzers aus dem Heizbad hochgehoben werden kann.

Diese Aufgaben werden erfindungsgemäss mit einem Stativ und einem Verfahren gelöst, welche die Merkmale im kennzeichnenden Teil der unabhängigen Ansprüche aufweisen. Weitere bevorzugte Ausführungsformen sind Gegenstand der Unteransprüche.

Das höhenverstellbare Stativ ist insbesondere für einen Rotationsverdampfer geeignet. Es wären aber auch andere Einsatzzwecke denkbar. Das Stativ weist eine Haltevorrichtung zum Befestigen eines Glassatzes auf. Der Glassatz besteht typischerweise aus einem Kolben eines Rotationsverdampfers. Die Haltevorrichtung ist mit an sich bekannten Vorrichtungen zum Drehen des Glassatzes versehen. Der Inhalt der EP 149 972 wird, was die Ausgestaltung des Glassatzes und die Haltevorrichtung betrifft, durch Querverweis ausdrücklich in die vorliegende Anmeldung aufgenommen.

Das Stativ weist ausserdem eine Stativstange auf. Die Haltevorrichtung ist entlang der Stativstange verschiebbar. Die Haltevorrichtung kann ausserdem mit einem, mit einem Kupplungselement zusammenwirkenden, z.B. um eine Seiltrommel gewickelten Seilzug in Wirkverbindung bringbar sein.

Erfindnungsgemäss ist bei einem höhenstellbaren Stativ mit einer Haltevorrichtung, die entlang einer Stativstange verschiebar ist, ein Antriebsmotor an der Haltevorrichtung selbst angeordnet. Der Motor ist mit bezüglich der Stativstange feststehenden Haltemitteln in Eingriff bringbar.

Der Seilzug kann derart befestigt sein, dass die Spannung des Seilzuges veränderbar ist. In einer ersten Lage ist die Spannung des Seilzuges maximal und erzeugt Reibschluss mit dem Kupplungselement, insbesondere mit der Seiltrommel. In einer zweiten Lage ist die Spannung minimal und der Reibschluss zwischen Seilzug und Seiltrommel ist aufgehoben.

In der ersten Lage bewegt sich deshalb durch Drehen der Seiltrommel die mit der Seiltrommel in Wirkverbindung stehende Haltevorrichtung. In der zweiten Lage ist die Haltevorrichtung aufgrund des fehlenden Reibschlusses zwischen Seilzug und Seiltrommel von der Seiltrommel entkoppelt.

Anstelle einer Seiltrommel sind andere Kupplungselemente denkbar, die das Erzeugen eines Kraftschlusses bei gespanntem Seilzug erlauben.

In der zweiten Lage kann die Haltevorrichtung also einfach manuell bewegt, beispielsweise hochgehoben werden. In der ersten Lage ist die Haltevorrichtung aufgrund des Reibschlusses zwischen Seilzug und Seiltrommel nicht frei bewegbar. Bei Drehen der Seiltrommel (beispielsweise durch einen Motorantrieb) bewegt sich die Haltevorrichtung. Bei Stillstand der Seiltrommel verbleibt die Haltevorrichtung in einer fixen Position.

Unter Reibschluss wird in diesem Zusammenhang eine wenigstens teilweise eine Kraft übertragende Verbindung zwischen dem Seilzug und der Seiltrommel verstanden. Eine Bewegung der Seiltrommel führt zu einer Bewegung des Seilzuges.

Bei einem Stillstand der Rotationsbewegung des Verdampferkolbens wird die Spannung am Seilzug reduziert. Damit ist die Haltevorrichtung bezüglich dem Stativ frei bewegbar und kann hochgehoben werden.

Die Seiltrommel ist vorzugsweise drehbar gelagert und motorisch antreibbar. Es ist aber auch denkbar, an der Haltevorrichtung eine nicht drehbare Seiltrommel vorzusehen und den Seilzug auf andere geeignete Weise anzutreiben.

Als Haltemittel ist beispielsweise eine an der Stativstange angeordnete Zahnstange denkbar. Der Antriebsmotor kann mit einem Zahnrad versehen sein, welches in die Zahnstange eingreift und welches zur Entkoppelung der Haltevorrichtung ausser Eingriff mit der Zahnstange gebracht werden kann.

In einem besonders bevorzugten Ausführungsbeispiel sind die Haltemittel als Seilzug ausgebildet, der bezüglich der Stativstange fixiert ist. Der Antriebsmotor ist mit einer Seiltrommel versehen, um welche der Seilzug gewickelt ist. Der Seilzug übernimmt in diesem Fall die Funktion der Zahnstange. Die Haltevorrichtung kann vom Seilzug durch Reduktion der Spannung des Seilzuges entkoppelt werden. Der Seilzug ist bevorzugt zwischen einem fixen Endpunkt und einem bewegbaren Endpunkt eingespannt. Durch Bewegen des einen Endpunkts in Richtung des Seilzuges kann die Spannung des Seilzuges reduziert werden. Bei gespanntem Seilzug führt eine Drehung der Seiltrommel zu einer Bewegung der die Seiltrommel tragenden Haltevorrichtung. Bei entspanntem Seilzug lässt sich die Haltevorrichtung frei bewegen.

Gemäss einem alternativen Ausführungsbeispiel ist der Seilzug in sich geschlossen ausgebildet und fest mit der Haltevorrichtung verbunden. Der Seilzug ist um eine drehbar gelagerte Seiltrommel gewickelt, die bezüglich der Stativstange fest angeordnet ist. Der Seilzug ist um zwei Umlenkrollen geführt. Durch Veränderung des Abstands zwischen den Umlenkrollen kann die Seilspannung variiert werden. Bei ausreichend hoher Seilspannung ist die Reibverbindung zwischen Seiltrommel und Seilzug ausreichend gross, sodass eine Drehung der Seiltrommel zu einer Bewegung der Haltevorrichtung führt. Bei ausreichend geringer Seilspannung besteht keine Reibverbindung, sodass die Haltevorrichtung frei bewegt werden kann. Der Seilzug kann aber auch um eine fest mit der Haltevorrichtung verbundene Seiltrommel gewickelt werden und durch geeignete Mittel angetrieben werden.

In einem bevorzugten Ausführungsbeispiel ist der bewegbare Endpunkt des zwischen den beiden Endpunkten eingespannten Seilzuges als Fixierung ausgebildet, die mit einer Feder vorgespannt ist. Die Feder erzeugt eine ausreichende Spannung am Seilzug, sodass im Normalzustand die Seiltrommel mit dem Seilzug in Reibverbindung steht. Durch Verschieben der Fixierung gegen die Kraft der Feder kann die Seiltrommel vom Seilzug entkoppelt werden.

Gemäss einem weiter bevorzugten Ausführungsbeispiel ist das Stativ ausserdem mit einem Betätigungsarm zum Bewegen der Fixierung gegen die Federkraft versehen. Der Betätigungsarm kann drehbar um einen Drehpunkt gelagert sein, sodass eine Hebelkraft erzeugt wird. Durch Betätigen des Betätigungsarms wird die Spannung des Seilzugs reduziert und der Seilzug entkoppelt sich von der Seiltrommel. Die Haltevorrichtung kann bei betätigtem Betätigungsarm frei verschoben werden.

Es ist ausserdem auch denkbar, den bewegbaren Endpunkt motorisch zu bewegen, beispielsweise durch einen Magnetantrieb. Eine motorische Bewegbarkeit des bewegbaren Endpunktes erlaubt eine automatische Entkoppelung der Haltevorrichtung bei einem Betriebsunterbruch des Rotationsverdampfers. Zu diesem Zweck kann eine Anordnung zum automatischen Bewegen des bewegbaren Endpunktes bei Stillstand eines drehbar gehaltenen Glassatzes vorgesehen sein.

Eine besonders bevorzugte Ausführungsform der Erfindung ergibt sich, wenn die Haltevorrichtung ausserdem über einen Kraftspeicher direkt oder indirekt mit der Stativstange verbunden ist. Die Haltevorrichtung ist dabei gegen die Kraft des Kraftspeichers absenkbar und mit Hilfe des Kraftspeichers hochhebbar. Wenn der Seilzug gespannt ist, steht der Seilzug mit der Seiltrommel in Reibverbindung. Bei gespanntem Seilzug bleibt die Haltevorrichtung bei sich nicht drehender Seiltrommel trotz dem Kraftspeicher in einer bestimmten Lage. Durch Drehen der Seiltrommel wird die Haltevorrichtung gegen die Kraft bzw. mit Unterstützung des Kraftspeichers bewegt. Bei Reduktion der Spannung des Seilzuges wird der Reibschluss zwischen Seiltrommel und Seilzug aufgehoben, sodass die Haltevorrichtung mit Hilfe des Kraftspeichers automatisch hochgehoben wird. Diese Anordnung ist vor allem in Kombination mit dem voranstehend beschriebenen Betätigungsarm vorteilhaft. Durch einfaches Drücken des Betätigungsarms wird die Spannung des Federzuges reduziert und die Haltevorrichtung wird dank dem Kraftspeicher automatisch hochgehoben.

Die Spannung, die zum Erzielen eines Reibschlusses zwischen Seiltrommel und Seilzug notwendig ist, hängt nicht nur von den Reibungsquoeffizienten der Seiltrommel und des Seilzuges sondern auch von der Grösse der Kraft des Kraftspeichers und dem Gewicht der Haltevorrichtung ab. Die Spannung des Seilzuges wird entsprechend den möglichen Gewichten der Haltevorrichtung und entsprechend der Kraft des Kraftspeichers dimensioniert.

Die Haltevorrichtung kann vorzugsweise auf Rollen entlang einer Stativstange verschiebbar gelagert sein. Die Stativstange ist dabei bevorzugt als Profil ausgebildet, das Führungsschienen für die Rollen aufweist.

Die Führung einer Haltevorrichtung in einer Führungsschiene mittels Rollen kann selbstverständlich auch bei anders ausgebildeten Stativanordnungen vorteilhaft sein.

Die Erfindung wird im Folgenden in Ausführungsbeispielen und anhand der Zeichnungen näher erläutert. Es zeigen:
- Figur 1: eine schematische Darstellung eines erfindungsgemässen Stativs in der Seitenasicht,
- Figur 2: Draufsicht auf die Stativstange des Stativs gemäss Figur 1,
- Figur 3: Seitenansicht der Seiltrommel des Ausführungsbeispiels gemäss Figur 1,
- Figuren 4a und 4c: schematische Darstellungen von nicht erfindungsgemässen Beispielen von Stativen mit nicht feststehenden Haltemitteln,
- Figuren 4b und 4d: schematische Dartstellungen von alternativen Ausführungsbeispielen, und
- Figur 5: eine perspektivische Darstellung einer auf einer Führungsschiene verschiebbar gehaltenen Haltevorrichtung.

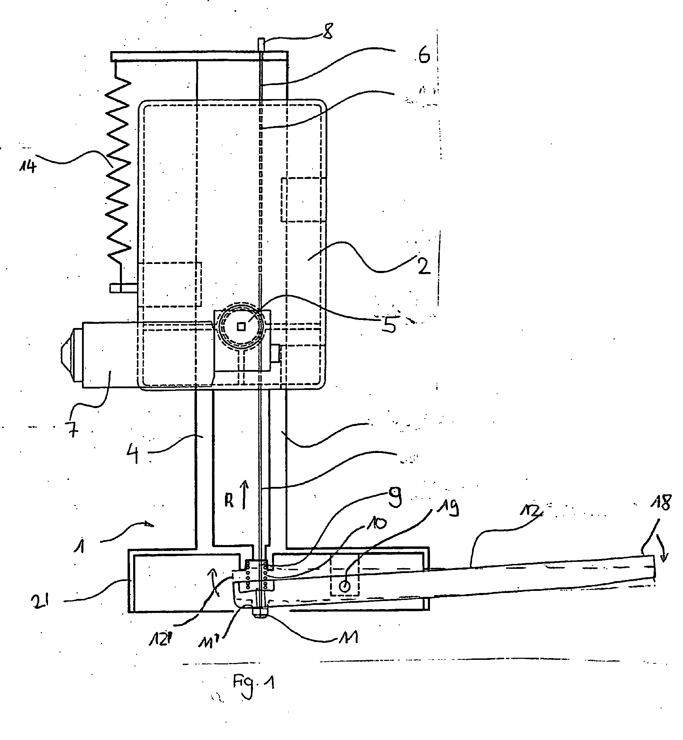

Figur 1 zeigt ein höhenverstellbares Stativ 1. Das Stativ 1 besteht im wesentlichen aus einer Grundplatte 21, auf welcher eine Stativstange 4 befestigt ist. Entlang der Stativstange 4 ist eine Haltevorrichtung 2 verschiebbar gelagert. Die Haltevorrichtung 2 dient zur Aufnahme eines Glassatzes, insbesondere eines Kolbens für einen Rotationsverdampfer. Die Haltevorrichtung ist ausserdem mit einer Anordnung zum Drehen des Glassatzes versehen. Ausserdem ist dem Stativ ein Heizbad zugeordnet. Die Ausbildung des Heizbades und der Drehvorrichtung für den Glassatz ist dem Fachmann bekannt und wird nicht im Detail erläutert.

Die Haltevorrichtung 2 ist ausserdem mit einem Antriebsmotor 7 versehen. Der Antriebsmotor 7 treibt über eine nicht dargestellte Getriebeanordnung eine Seiltrommel 5 an. Die Stativstange 4 ist mit einem Seilzug 6 versehen. Der Seilzug 6 ist an einem Ende 8 mit einem fixen Endpunkt am Stativ befestigt. Das andere Ende 9 des Seilzugs 6 ist in einer beweglichen Fixierung gehalten. Die bewegliche Fixierung besteht aus einem Betätigungsarm 12. Der Betätigungsarm 12 ist mit einer Bohrung 25 versehen, durch welche der Seilzug 6 geführt ist. Der Seilzug 6 ist auf der Oberfläche des Betätigungsarms 12 mit einer Schraube 11 gehalten. Der Betätigungsarm 12 und damit der bewegbare Endpunkt 9 des Seilzugs 6 sind in einer Richtung R entlang dem Seilzug gegen die Kraft einer Feder 10 verschiebbar.

Der Betätigungsarm 12 ist um einen Drehpunkt 19 drehbar gelagert. Durch Herunterdrücken des Endes 18 des Betätigungsarms 12 in Pfeilrichtung wird das bewegbare Ende 9 des Seilzuges 6 in Pfeilrichtung nach oben verschwenkt. Die Lage der Schraube 11' und des Betätigungsarms 12' in gegen die Feder gespannte Position ist gestrichelt dargestellt.

Es ist auch denkbar, eine Anordnung zum automatischen Hochheben der Haltevorrichtung vorzusehen, die bei Drücken eines Stopp-Knopfes oder bei Überhitzung des Glassatzes bzw. bei Stillstand des Glassatzes den Seilzug 6 automatisch entspannt.

Der Seilzug 6 ist um die Seiltrommel 5 gewickelt. Vorzugsweise ist eine Wicklung um 720° vorgesehen. Zum Verändern der Reibwirkung kann es aber auch möglich sein, mehr oder weniger Umwicklungen vorzusehen.

Die Haltevorrichtung 2 ist ausserdem über einen Kraftspeicher 14 mit der Stativstange 4 bzw. mit mit der Stativstange 4 verbundenen Elementen verbunden. Der Kraftspeicher 14 ist schematisch als Feder dargestellt. Es sind neben Spiralfedern auch Gasdruckfeder oder auch andere Kraftspeicher denkbar. Die Haltevorrichtung 4 kann an einem Kraftspeicher 14 unter Zug aufgehängt oder auf einem komprimierbaren Kraftspeicher abgestützt sein. Gasdruckfedern sind in diesem Zusammenhang besonders bevorzugt.

Wenn sich der Betätigungsarm 12' in der gestrichelt dargestellten Lage befindet, ist der Seilzug 6 entspannt und die Reibkraft zwischen dem Seilzug 6 und der Seiltrommel 5 ist so gering, dass die Haltevorrichtung 2 sich frei bewegen lässt. Aufgrund des Kraftspeichers 14 wird bei nach unten gedrücktem Ende 18 des Betätigungsarms 12 die Haltevorrichtung 2 automatisch hochgehoben.

Ohne äussere Krafteinwirkung befindet sich der Betätigungsarm 12 aufgrund der Kraft der Feder 10 in der mit durchgehenden Linien dargestellten Position. Dadurch ist der Seilzug 6 gespannt und steht mit der Seiltrommel 5 in Reischluss. Die Kraft der Feder 10 ist ausreichend gross gewählt, sodass die Reibkraft zwischen Seiltrommel 5 und Seilzug 6 ausreicht, um die Kraft des Kraftspeichers 14 und das Eigengewicht der Haltevorrichtung 2 (und eines montierten Glassatzes) zu kompensieren. Wenn die Seiltrommel 5 sich nicht dreht, verbleibt die Haltevorrichtung 2 in einer bestimmten Position. Durch Anhalten der Seiltrommel 5 wird die Haltevorrichtung 2 festgestellt. Sobald die Seiltrommel 5 bei gespanntem Seilzug 6 gedreht wird, wird die Haltevorrichtung 2 entsprechend der Drehrichtung der Seiltrommel 5 hochgehoben oder nach unten gefahren.

Der Seilzug 6 besteht vorzugsweise aus einem ummantelten Stahlseil oder auch aus einem Kunststoffseil, beispielsweise aus Keflar. Die Seiltrommel 5 besteht aus Stahl oder Aluminium Die Haltevorrichtung ist als verschiebbar entlang der Stativstange gelagerter Wagen ausgebildet. Der Wagen kann aus Aluminium oder aus Kunststoff bestehen. Der schematisch dargestellte Antriebsmotor 7 ist vorzugsweise als Elektromotor ausgebildet.

In Figur 2 ist eine Draufsicht auf die Stativstange 4 und die Haltevorrichtung 2 gezeigt. Die Stativstange 4 ist als Führungsschiene ausgebildet, die Führungen 20 aufweist. Die Haltevorrichtung 2 weist drei Rollen 15 auf, die in den Führungsschienen 20 gleiten. Die drei Rollen 15 sind in einer Ebene angeordnet. In einer der Führungsschienen 20 gleitet eine Rolle während in der anderen Führungsschiene 20 zwei Rollen gleiten. Durch die Dreipunktauflage wird eine besonders stabile und verkantungsfreie Führung der Haltevorrichtung 2 entlang der Stativstange 4 erzielt.

Der Antriebsmotor 7 ist fest mit der Haltevorrichtung 2 verbunden und treibt die fest mit der Haltevorrichtung verbundene Seiltrommel 5 an.

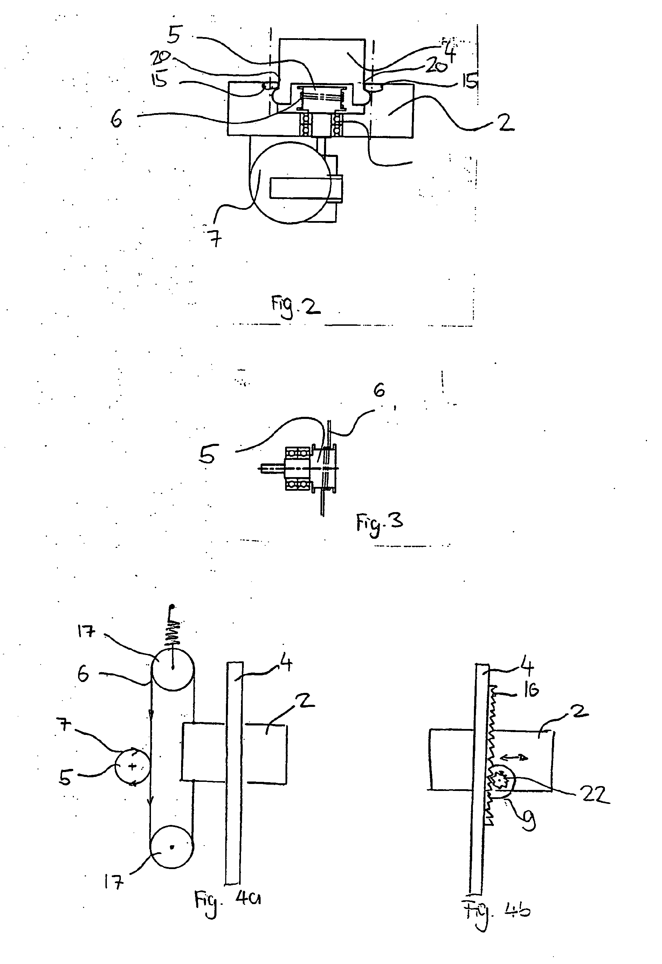

In Figur 3 ist die Seiltrommel 5 vergrössert in Seitenansicht dargestellt. Der Seilzug 6 ist über einen Winkel von 1080° (d.h. 3 mal) um die Seiltrommel 5 gewickelt.

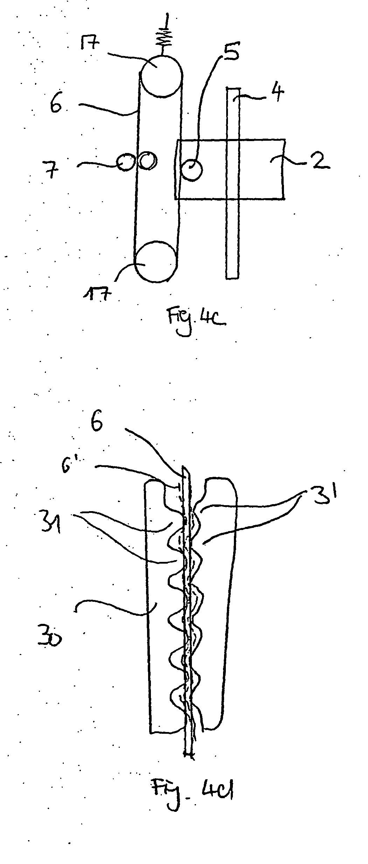

In Figure 4b ist eine alternative Ausführungsform der Erfindung gezeigt.

Gemäss dem nicht beanspruchten Beispiel von Figur 4a ist die Haltevorrichtung 2 entlang der Stativstange 4 veschiebbar und fest mit einem Seilzug 6 verbunden. Der Seilzug 6 ist in sich geschlossen ausgebildet und wird über zwei Umlenkrollen 17 umgelenkt. Das Stativ weist ausserdem eine Seiltrommel 5 mit einem Antriebsmotor 7 auf. Die Seiltrommel 5 ist fest bezüglich der Stativstange 4 angeordnet. Der Seilzug 6 ist um die Seiltrommel 5 gewickelt. Eine der beiden Umlenkrollen 17 ist ausserdem beweglich ausgebildet, sodass die Spannung auf den Seilzug 6 verändert werden kann. Bei gespanntem Seilzug 6 ist die Reibkraft zwischen dem Seilzug 6 und der Seiltrommel 5 ausreichend gross, damit eine Drehung der Seiltrommel 5 zu einer Bewegung der Haltevorrichtung 2 führt bzw. damit bei feststehender Seiltrommel 5 die Haltevorrichtung 2 festgestellt ist. Durch Entspannen des Seilzugs 6 wird der Seilzug 6 von der Seiltrommel 5 entkoppelt und die Haltevorrichtung 2 kann frei bewegt werden. Selbstverständlich sind bei Beispiel gemäss Figur 4a die in Figur 1 gezeigten Details, insbesondere Kraftspeicher, Betätigungsarm ebenfalls vorteilhaft. Der Betätigungsarm kann zum Verschieben der bewegbaren, beispielsweise der oberen Umlenkrolle 17 in ähnlicher Weise eingesetzt werden.

In Figur 4b ist ein alternatives Ausführungsbeispiel der Erfindung gezeigt. Der Antriebsmotor 9 ist fest mit der Haltevorrichtung 2 verbunden. Der Antriebsmotor 9 weist ein Zahnrad 22 auf, welches mit einer Zahnstange 16 in Eingriff bringbar ist. Die Zahnstange 16 ist fest mit der Stativstange 4 verbunden. Durch seitliches Verschieben des Antriebsmotors 9 in Richtung des Doppelpfeils kann das Zahnrad 22 ausser Eingriff mit der Zahnstange 16 gebracht werden. Die Haltevorrichtung 2 lässt sich damit ebenfalls frei bewegen.

Gemäss dem nicht beanspruchten Beispiel in Figur 4c weist die Haltevorrichtung 2 eine nicht drehbare, als Kupplungselement wirkende Seiltrommel 5 auf, um die der Seilzug 6 gewickelt ist. Der Seilzug 6 ist durch einen Motor 7 antreibbar, der den Seilzug 6 einklemmende Walzen dreht. Durch Entspannen des Seilzugs 6 wird der Reibschluss zwischen der Seiltrommel 5 und dem Seilzug 6 aufgehoben. Die Haltevorrichtung ist frei bewegbar.

In Figur 4d ist ein alternatives Kupplungssystem 30 gezeigt. Das Kupplungssystem kann im Ausführungsbeispiel gemäss Figur 4c anstelle der Seiltrommel 5 eingesetzt werden. Bei gespanntem Seilzug 6 besteht Reibschluss zwischen den nach innen gerichteten Nasen 31 des Kupplungselementes 30 und dem Seilzug 6. Bei entspanntem Seilzug 6 (gestrichelt dargestellt) gleitet der Seilzug 6 im Kupplungselement 30.

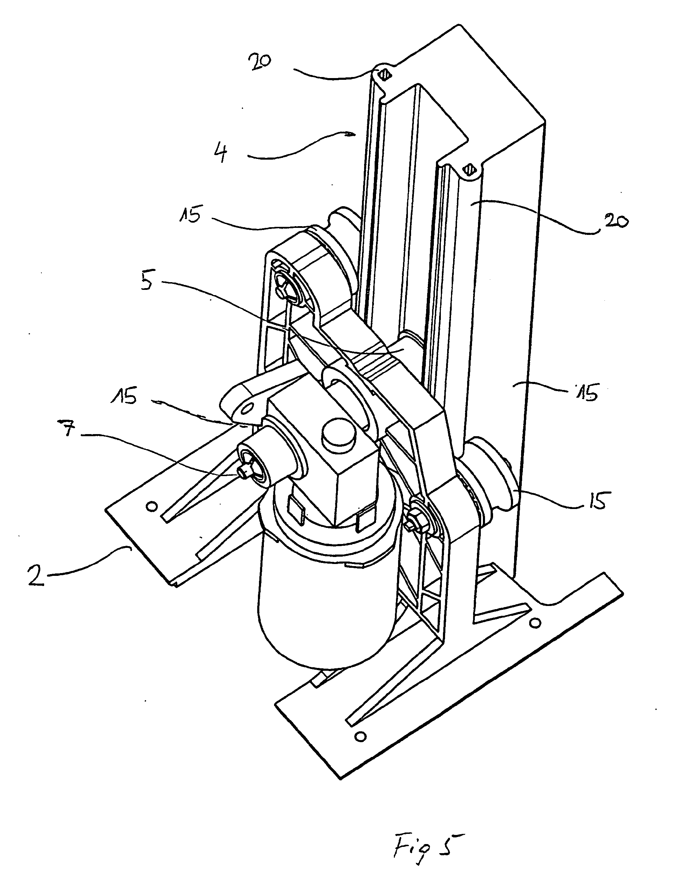

Figur 5 zeigt in perspektivischer Darstellung einen Ausschnitt aus der Haltevorrichtung 2, welche entlang der Stativstange 4 verschiebbar gehalten ist. Die Stativstange 4 ist als Führungsschiene ausgebildet, die zwei Führungen 20 aufweist. Die Haltevorrichtung 2 ist mit drei Rollen 15 in den Führungsschienen 20 verschiebbar gelagert. Eine erste Rolle verläuft in einer ersten Führungsschiene 20 (siehe rechte Seite in Figur 5). In der in Figur 5 links dargestellten Führungsschiene 20 sind zwei Rollen 15 gelagert, wobei die untere Rolle 15 durch den Antriebsmotor 9 und eine Getriebeanordnung verdeckt ist. Die Seiltrommel 5 ist auf einer durch den Antriebsmotor 7 betätigten Welle gelagert.

## Patentansprüche

1. Stativ mit einer Haltevorrichtung (2) zum Befestigen eines Glassatzes, welche Haltevorrichtung (2) entlang einer Stativstange (4) verschiebbar ist und einen Antriebsmotor (7) aufweist, mittels welchem die Haltevorrichtung (2) antreibbar ist,
**dadurch gekennzeichnet, dass** der Antriebsmotor (7) an der Haltevorrichtung (2) angeordnet ist und mit bezüglich der Stativstange (4) feststehenden Haltemitteln in Eingriff bringbar und auskoppelbar ist.

2. Stativ nach Anspruch 1, **dadurch gekennzeichnet, dass** ein Seilzug (6) zwischen einem in Bezug auf das Stativ festen Endpunkt (8) und einem bewegbaren Endpunkt (9) eingespannt ist, wobei der bewegbare Endpunkt (9) in Richtung (R) des Seilzuges (6) verschiebbar ist.

3. Stativ nach Anspruch 2, **dadurch gekennzeichnet, dass** der bewegbare Endpunkt (9) als mit einer Feder (10) vorgespannte Fixierung für den Seilzug (6) ausgebildet ist.

4. Stativ nach einem der Ansprüche 2 oder 3, **dadurch gekennzeichnet, dass** das Stativ mit einem Betätigungsarm (12) zum Bewegen des bewegbaren Endpunktes (9) gegen die Kraft der Feder (10) versehen ist.

5. Stativ nach einem der Ansprüche 2 bis 4, **dadurch gekennzeichnet, dass** der bewegbare Endpunkt (9) motorisch bewegbar ist.

6. Stativ nach Anspruch 5, **dadurch gekennzeichnet, dass** das Stativ eine Anordnung zum automatischen Bewegen des bewegbaren Endpunktes (9), insbesondere bei Stillstand eines drehbar gehaltenen Glassatzes, aufweist, wodurch der Seilzug (6) entspannbar ist.

7. Stativ nach einem der Ansprüche 1 bis 6, **dadurch gekennzeichnet, dass** die Haltevorrichtung (2) über einen Kraftspeicher (14) direkt oder indirekt mit der Stativstange (4) verbunden ist, wobei die Haltevorrichtung (2) gegen die Kraft des Kraftspeichers (14) absenkbar und mit Hilfe des Kraftspeichers (14) hochhebbar ist.

8. Stativ nach einem der Ansprüche 1 bis 7, **dadurch gekennezeichnet,** dass die Haltevorrichtung (2) mit Rollen (15), vorzugsweise mit drei Rollen (15), verschiebbar auf der Stativstange gelagert ist.

9. Stativ nach Anspruch 8, **dadurch gekennzeichnet, dass** die Stativstange (4) als Führungsschiene mit Führungen (20) ausgebildet ist, entlang welchen die Rollen (15) geführt sind.

10. Stativ nach einem der Ansprüche 1 bis 9, **dadurch gekennzeichnet, dass** die Seiltrommel (5) drehbar gelagert ist und vorzugsweise motorisch antreibbar ist.

11. Verfahren zum Auskuppeln der Haltevorrichtung (2) für einen Glassatz am Stativ eines Rotationsverdampfers von einem Antriebsmotor (7), wobei der Antriebsmotor (7) an der Haltevorrichtung angebracht ist, d**adurch gekennzeichnet, dass** der Antriebsmotor zum Auskuppeln von bezüglich der Stativstange feststehenden Haltemitteln ausgekoppelt wird.

12. Rotationsverdampfer mit einem Stativ nach einem der Ansprüche 1 bis 10.

## Claims

1. Stand having a holding device (2) for fixing a glass unit, which holding device (2) is displaceable along a stand rod (4) and comprises a drive motor (7), by means of which the holding device (2) may be driven, **characterized in that** the drive motor (7) is arranged on the holding device (2) and may be brought into engagement with and uncoupled from holding means which are stationary relative to the stand rod (4).

2. Stand according to Claim 1, **characterized in that** a cable (6) is mounted between an end point (8) which is fixed relative to the stand and a movable end point (9), the movable end point (9) being displaceable in the direction (R) of the cable (6).

3. Stand according to Claim 2, **characterized in that** the movable end point (9) takes the form of a fixing means, pretensioned by a spring (10), for the cable (6).

4. Stand according to one of Claims 2 or 3, **characterized in that** the stand is provided with an actuating arm (12) for moving the movable end point (9) against the force of the spring (10).

5. Stand according to one of Claims 2 to 4, **characterized in that** the movable end point (9) may be moved by motor.

6. Stand according to Claim 5, **characterized in that** the stand comprises an arrangement for automatically moving the movable end point (9), in particular when a rotatably mounted glass unit is at a standstill, whereby the cable (6) may be relieved.

7. Stand according to one of Claims 1 to 6, **characterized in that** the holding device (2) is connected directly or indirectly to the stand rod (4) via an energy storage mechanism (14), the holding device (2) being lowerable against the force of the energy storage mechanism (14) and raisable by means of the energy storage mechanism (14).

8. Stand according to one of Claims 1 to 7, **characterized in that** the holding device (2) is mounted displaceably on the stand rod with rollers (15), preferably with three rollers (15).

9. Stand according to Claim 8, **characterized in that** the stand rod (4) takes the form of a guide rail with guides (20), along which the rollers (15) are guided.

10. Stand according to one of Claims 1 to 9, **characterized in that** the cable drum (5) is rotatably mounted and is preferably motor-drivable.

11. Method of uncoupling the holding device (2) for a glass unit on the stand of a rotary evaporator from a drive motor (7), the drive motor (7) being attached to the holding device, **characterized in that**, for the purpose of uncoupling, the drive motor is uncoupled from holding means which are stationary relative to the stand rod.

12. Rotary evaporator having a stand according to one of Claims 1 to 10.

## Revendications

1. Support comprenant un dispositif de maintien (2) pour la fixation d'un ensemble de récipients en verre, lequel dispositif de maintien (2) peut être déplacé le long d'une barre du support (4) et présente un moteur d'entraînement (7) au moyen duquel le dispositif de maintien (2) peut être entraîné,
**caractérisé en ce que** le moteur d'entraînement (7) est disposé sur le dispositif de maintien (2) et peut être amené en prise avec des moyens de maintien fixes par rapport à la barre du support (4) et en être désaccouplé.

2. Support selon la revendication 1, **caractérisé en ce qu'**un câble (6) est tendu entre un point terminal (8) fixe par rapport au support et un point terminal (9) mobile, le point terminal mobile (9) pouvant être déplacé dans la direction (R) du câble (6).

3. Support selon la revendication 2, **caractérisé en ce que** le point terminal mobile (9) est réalisé sous la forme d'une fixation précontrainte par un ressort (10) pour le câble (6).

4. Support selon l'une quelconque des revendications 2 ou 3, **caractérisé en ce que** le support est pourvu d'un bras d'actionnement (12) pour déplacer le point terminal mobile (9) à l'encontre de la force du ressort (10).

5. Support selon l'une quelconque des revendications 2 à 4, **caractérisé en ce que** le point terminal mobile (9) peut être déplacé par un moteur.

6. Support selon la revendication 5, **caractérisé en ce que** le support présente un agencement pour le déplacement automatique du point terminal mobile (9), notamment si un ensemble de récipients en verre maintenu de manière rotative est immobile, de sorte que le câble (6) puisse être détendu.

7. Support selon l'une quelconque des revendications 1 à 6, **caractérisé en ce que** le dispositif de maintien (2) est connecté directement ou indirectement à la barre du support (4) au moyen d'un accumulateur de force (14), le dispositif de maintien (2) pouvant être abaissé à l'encontre de la force de l'accumulateur de force (14) et pouvant être soulevé à l'aide de l'accumulateur de force (14).

8. Support selon l'une quelconque des revendications 1 à 7, **caractérisé en ce que** le dispositif de maintien (2) est monté avec des galets (15), de préférence avec trois galets (15), de manière déplaçable sur la barre du support.

9. Support selon la revendication 8, **caractérisé en ce que** la barre du support (4) est réalisée sous la forme d'un rail de guidage avec des coulisses (20) le long desquelles les galets (15) sont guidés.

10. Support selon l'une quelconque des revendications 1 à 9, **caractérisé en ce que** le tambour du câble (5) est monté à rotation et peut de préférence être entraîné par un moteur.

11. Procédé pour désaccoupler le dispositif de maintien (2) pour un ensemble de récipients en verre sur le support d'un évaporateur rotatif d'un moteur d'entraînement (7), le moteur d'entraînement (7) étant monté sur le dispositif de maintien, **caractérisé en ce que** le moteur d'entraînement est désaccouplé pour le désaccouplement de moyens de maintien fixes par rapport à la barre du support.

12. Evaporateur rotatif comprenant un support selon l'une quelconque des revendications 1 à 10.
